# EUROPEAN PATENT APPLICATION

(11) **EP 2 547 145 A1**
(43) Date of publication of application: **16.01.2013**
(21) Application number: 10847193.9
(22) Date of filing: 09.03.2010
(51) Int. Cl.: H04W 28/24, H04W 4/24, H04L 12/14, H04L 12/56

(54) **METHOD AND EQUIPMENT FOR CONTROLLING QUALITY OF SERVICE OF USER TERMINAL DEVICE**

(71) Applicant: Alcatel Lucent, 75007 Paris (FR)
(72) Inventor: LI, Xiangyang, Beijing 100193 (CN)
(74) Representative: Hervouet, Sylvie
(86) International application number: PCT/CN2010/070930
(87) International publication number: WO 2011/109934

(57) **Abstract**

The invention provides a method and apparatus for controlling, in a policy and charging rules function entity, quality of service of a user equipment. The method includes the steps of: obtaining charging-related information of the user equipment (210); and determining the quality of service corresponding to the user equipment according to the charging-related information (220). With the introduction of the charging-related information, the policy and charging rules function entity can control quality of service according to the existing system resources and the contribution and demand of the user equipment to thereby balance reasonably demands of different user equipments and to utilize effectively the limited resources of the system.

## Description

### Field of the invention

The present disclosure relates to the control quality of service of a user equipment and particularly to a method and apparatus for controlling, in a policy and charging rules function entity, quality of service of a user equipment.

### Background of the invention

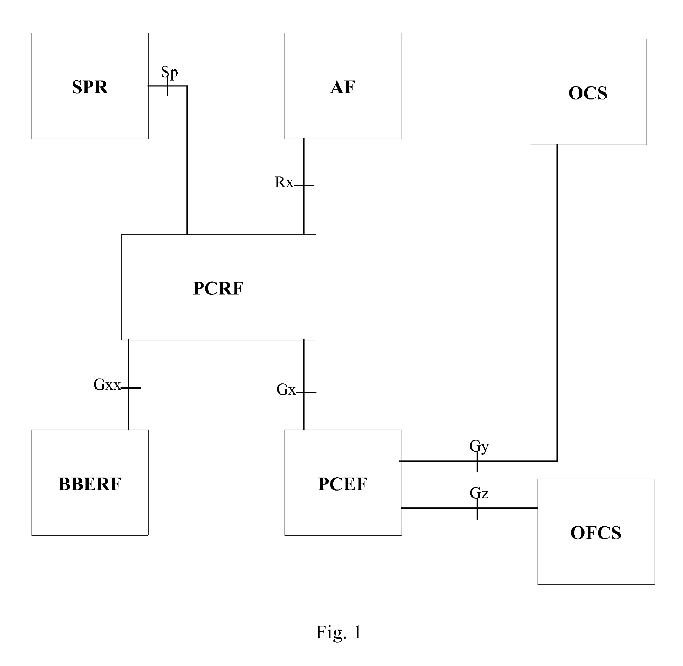

According to the Policy and Charging Control (PCC) standard of the 3^{rd} Generation Partnership Project, Long Term Evolution (3GPP LTE), the policy and charging control structure includes a Policy and Charging Enforcement Function (PCEF) entity, a Bearer Binding and Event Reporting Function (BBERF) entity, a Policy and Charging Rules Function (PCRF) entity, an Application Function (AF) entity, an Online Charging System (OCS), an Offline Charging System (OFCS), and a Subscription Profile Repository (SPR), etc., as illustrated in Fig.1.

Policy and charging control includes gating control and Quality of Service (QoS) control. Quality of service control includes control of parameters, e.g., transmission rate, bandwidth, average delay, delay jitter, etc., of the traffic stream.

### Summary of the invention

The inventors of the invention have identified that in the existing policy and charging control structure, the policy and charging rules function entity controls quality of service of the user equipment without considering charging-related information of the user equipment. For an operator of the communication system, the charging-related information is an important parameter which can reflect effectively the operation condition of the communication system. For the user equipment, the charging-related information can reflect the contribution of the user equipment to the communication system and the requirement of the user equipment on quality of communication. Therefore the quality of service control strategy determined based upon the charging-related information can balance reasonably demands of different user equipments and utilize effectively limited resources of the system.

Based upon the foregoing understanding of the prior art and the existent problem, it will be very important to control quality of service of the user equipment based upon charging-related information of the user equipment.

In order to better address the foregoing concerns, according to an embodiment of a first aspect of the invention, there is provided a method, in a policy and charging rules function entity, of controlling quality of service corresponding to a user equipment, the method comprising the steps of:
A. obtaining charging-related information about the user equipment; and
B. determining the quality of service corresponding to the user equipment according to the charging-related information.

With the introduction of the charging-related information, the policy and charging rules function entity can control quality of service according to the existing system resources and the contribution and demand of the user equipment to thereby balance reasonably the demands of different user equipments and to utilize effectively the limited resources of the system.

According to an embodiment of a second aspect of the invention, there is provided a controlling apparatus, in a policy and charging rule function entity, for controlling quality of service corresponding to a user equipment, the controlling apparatus comprising:
a first obtaining device configured to obtain charging-related information about the user equipment; and
a first determining device configured to determine the quality of service corresponding to the user equipment according to the charging-related information.

The respective aspects of the invention will become more apparent from the foregoing description of embodiments.

### Brief description of drawings

The foregoing and other features of the invention will become more apparent upon review of the foregoing detailed description of non-limiting embodiments taken with reference to the drawings in which:
Fig.1 is a schematic logic structural diagram of PCC;
Fig.2 is a flow chart of a method, in a policy and charging rules function entity, of controlling quality of service corresponding to a user equipment according to an embodiment of the invention;
Fig.3 is a flow chart of a method in which a policy and charging rules function entity obtains charging-related information about a user equipment according to an embodiment of the invention;
Fig.4 is a flow chart of a method in which a policy and charging rules function entity obtains charging-related information about a user equipment according to another embodiment of the invention;
Fig.5 is a flow chart of a method in which a policy and charging rules function entity obtains charging-related information about a user equipment according to a further embodiment of the invention;
Fig.6 is a flow chart of a method in which a policy and charging rules function entity obtains charging-related information about a user equipment according to still another embodiment of the invention; and
Fig.7 is a schematic diagram of a controlling apparatus according to an embodiment of the invention.

Like reference numerals denote like components throughout the drawings.

### Detailed description of embodiments

The invention will be further described below in details with reference to the drawings.

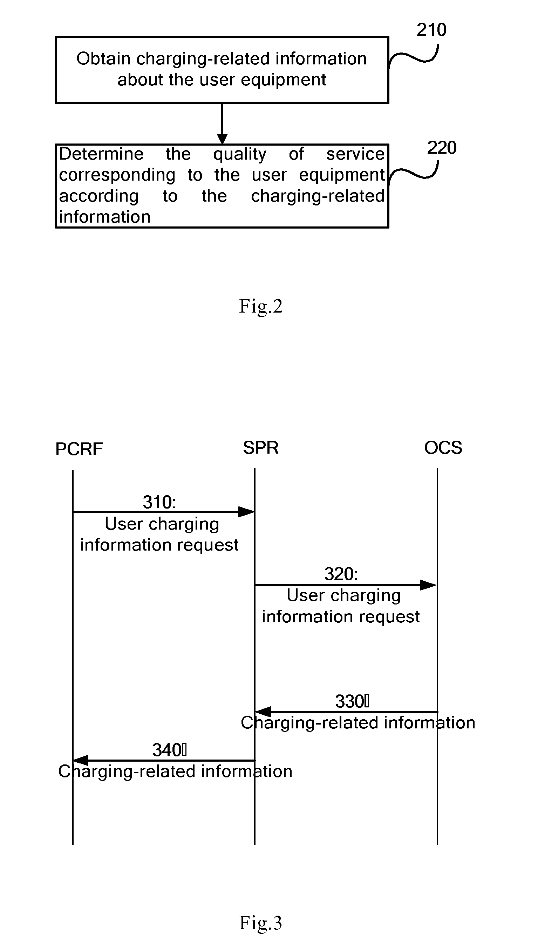

Fig.2 is a flow chart of a method, in a policy and charging rules function entity, of controlling quality of service corresponding to a user equipment according to an embodiment of the invention.

According to an embodiment of a first aspect of the invention, there is provided a method, in a policy and charging rules function entity, of controlling quality of service corresponding to a user equipment.

Referring to Fig.2, the method includes the step 210 in which the policy and charging rules function entity obtains charging-related information about the user equipment.

The charging-related information can include various types of information, for example, the tariff package type of the user equipment (e.g., the tariff package A: 5G data can be used at a fee of 50 Yuan monthly), the recharge amount of the user equipment (e.g., the user recharges with 100 Yuan once), a plurality of rates of the user equipment corresponding to a plurality of time periods (e.g., 10 Yuan is charged for the use of 1M data from PM 10:00 to AM 6:00 and 20 Yuan is charged for the use of 1M data at other time), a plurality of rates of the user equipment corresponding to a plurality of geographical areas (e.g., 25 Yuan is charged for the use of 1M data in an office building and 10 Yuan is charged for the use of 1M data in a residential area), etc.

The charging-related information about the user equipment is charging-related information of the user corresponding to the user equipment, that is, charging-related information corresponding to the Subscriber Identity Module (SIM) used in the user equipment.

The method further includes the step 220 in which the policy and charging rules function entity determines the quality of service corresponding to the user equipment according to the charging-related information.

The quality of service corresponding to the user equipment refers to quality of service with which the user equipment receives data and/or data is transmitted to the user equipment. The quality of service can be characterized by various parameters, e.g., the transmission rate, the bandwidth, the average delay, the delay jitter, etc.

In an embodiment, the policy and charging rules function entity transmits a quality of service indicator to a policy and charging enforcement function entity. The quality of service indicator indicates the determined quality of service. The policy and charging enforcement function entity controls the quality of service of the user equipment according to the quality of service determined by the policy and charging rules function entity.

The policy and charging rules function can obtain the charging-related information about the user equipment in numerous ways.

Fig.3 is a flow chart of a method in which a policy and charging rules function entity obtains charging-related information about a user equipment according to an embodiment of the invention.

Referring to Fig.3, in the step 310, the policy and charging rules function entity transmits a user charging information request to the subscription profile repository. The user charging information request is used for requesting the subscription profile repository to transmit the charging-related information.

In the step 320, the subscription profile repository forwards the user charging information request to the online charging system.

In the step 330, the online charging system transmits the charging-related information to the subscription profile repository.

In the step 340, the policy and charging rules function entity receives the charging-related information from the subscription profile repository.

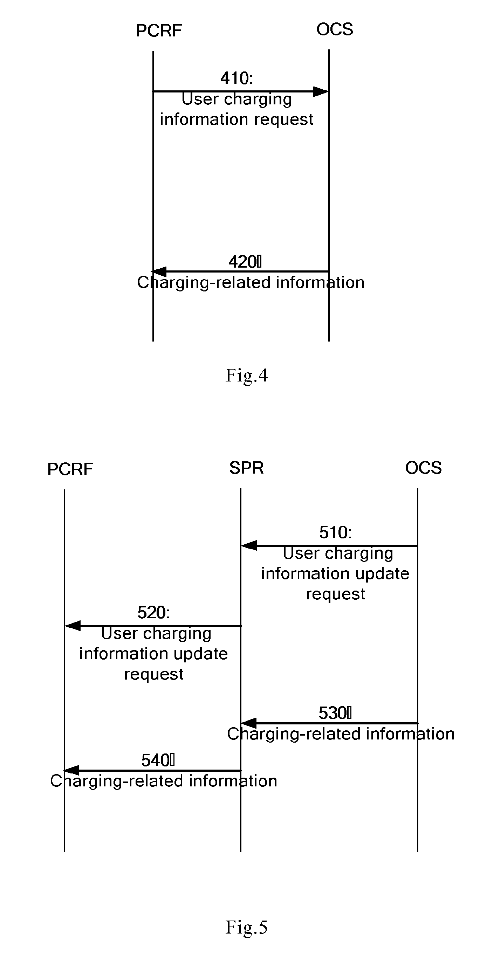

Fig.4 is a flow chart of a method in which a policy and charging rules function entity obtains charging-related information about a user equipment according to another embodiment of the invention.

Referring to Fig.4, in the step 410, the policy and charging rules function entity transmits a user charging information request to the subscription profile repository. The user charging information request is used for requesting the subscription profile repository to transmit the charging-related information.

In the step 420, the policy and charging rules function entity receives the charging-related information from the online charging system.

In the two embodiments illustrated in Fig.3 and Fig.4, the policy and charging rules function entity can obtain initiatively the charging-related information from the online charging system.

Fig.5 is a flow chart of a method in which a policy and charging rules function entity obtains charging-related information about a user equipment according to a further embodiment of the invention.

Referring to Fig.5, in the step 510, the online charging system transmits a user charging information update request to the subscription profile repository.

In the step 520, the subscription profile repository forwards the user charging information update request to the policy and charging rules function entity. The policy and charging rules function entity is ready to receive the charging-related information upon reception of the user charging information update request.

In the step 530, the online charging system transmits the charging-related information to the subscription profile repository.

In the step 540, the subscription profile repository forwards the charging-related information to the policy and charging rules function entity.

Optionally, the embodiment illustrated in Fig.5 can alternatively be implemented by the following steps. Firstly the online charging system transmits a user charging information update request to the subscription profile repository, and the user charging information update request includes the charging-related information. Then the subscription profile repository forwards the user charging information update request including the charging-related information to the policy and charging rules function entity.

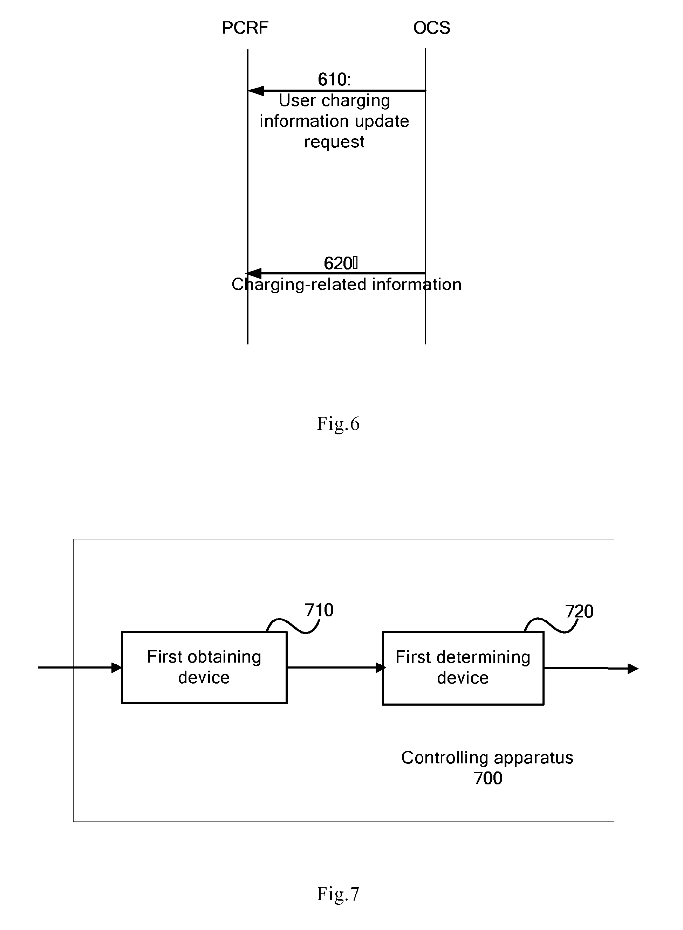

Fig.6 is a flow chart of a method in which a policy and charging rules function entity obtains charging-related information about a user equipment according to still another embodiment of the invention.

Referring to Fig.6, in the step 610, the online charging system transmits a user charging information update request to the policy and charging rules function entity. The policy and charging rules function entity is ready to receive the charging-related information upon reception of the user charging information update request.

In the step 620, the online charging system transmits the charging-related information to the policy and charging rules function entity.

Optionally, the embodiment illustrated in Fig.6 can alternatively be implemented by the following steps. The online charging system transmits a user charging information update request to the policy and charging rules function entity, and the user charging information update request includes the charging-related information.

In the two embodiments illustrated in Fig.5 and Fig.6, the online charging system can update initiatively the charging-related information in the policy and charging rules function entity so that the quality of service of the user equipment can be controlled in real time in response to the real-time change of the charging-related information of the user equipment in the online system.

The policy and charging rules function entity can determine the quality of service of the user equipment according to the charging-related information in numerous ways.

In an embodiment, the charging-related information includes the tariff package of the user equipment.

The tariff package can be embodied in numerous ways. For example, the tariff package offers 10G data available at a fee of 50 Yuan monthly. In another example, the tariff package offers 5G data available at a fee of 30 Yuan monthly.

Firstly the policy and charging rules function entity obtains the amount of used data of the user equipment in a period of the tariff package.

The period of the tariff package is the time period corresponding to the tariff package. For example, the tariff package offers 10G data available at a fee of 50 Yuan monthly, and then the period of the tariff package is a month. In another example, the tariff package offers 25G data available at a fee of 100 Yuan monthly, and then the period of the tariff package is a quarter.

The amount of used data is the amount of data used by the user equipment in a period of the tariff package. For example, the user equipment has used 6G data in a shorter time period than a month, and the amount of used data is 6G. In another example, the user equipment has used 10G data in a shorter time period than a quarter, and the amount of used data is 10G.

Then the policy and charging rules function entity compares the amount of used data with a predetermined amount of data corresponding to the tariff package.

The predetermined amount is the amount of available data corresponding to the amount of the fee specified in the tariff package. For example, the tariff package offers 10G data available at a fee of 50 Yuan monthly, and then the predetermined amount of data is 10G. In another example, the tariff package offers 25G data available at a fee of 100 Yuan monthly, and then the predetermined amount of data is 25G.

Finally the policy and charging rules function entity determines the quality of service corresponding to the user equipment according to a result of the comparison.

For example, when the amount of used data is below the predetermined amount of data, the user equipment is provided with a first predetermined data transmission rate (e.g., 10Mbps in the downlink and 5Mbps in the uplink), and when the amount of used data is above the predetermined amount of data, the user equipment is provided with a second predetermined data transmission rate below the first predetermined data transmission rate (e.g., 5Mbps in the downlink and 2Mbps in the uplink).

When the amount of used data of the user equipment exceeds the predetermined amount of data, the user can be alerted that he or she has used data the amount of which exceeds the predetermined amount of data by degrading the quality of service of the user equipment (for example, reducing the data transmission rate of user equipment or increasing the data transmission delay of the user equipment, etc.), thereby avoiding an expense of the user from exceeding his or her budgeted fee and also avoiding the situation of a malevolent overdue bill due to the amount of data used by some user exceeding his or her payment to thereby guarantee normal operation of the network.

In another embodiment, the charging-related information includes the recharge amount of the user equipment.

The recharge amount of the user equipment can be embodied in numerous ways, e.g., the recharge amount, the number of charging points, etc.

Firstly the policy and charging rules function entity compares the recharge amount with at least one predetermined recharge amount.

Then the policy and charging rules function entity determines the quality of service of the user equipment according to a result of the comparison.

For example, the at least one predetermined recharge amount are 50 Yuan, 100 Yuan and 150 Yuan. When the recharge amount of the user equipment is below 50 Yuan, the user equipment is provided with a third predetermined data transmission rate (e.g., 5Mbps in the downlink and 2Mbps in the uplink); when the recharge amount of the user equipment is between 50 Yuan and 100 Yuan, the user equipment is provided with a fourth predetermined data transmission rate above the third predetermined data transmission rate (e.g., 10Mbps in the downlink and 5Mbps in the uplink); and when the recharge amount of the user equipment is between 100 Yuan and 150 Yuan, the user equipment is provided with a fifth predetermined data transmission rate above the fourth predetermined data transmission rate (e.g., 15Mbps in the downlink and 5Mbps in the uplink); and when the recharge amount of the user equipment is above 150 Yuan, the user equipment is provided with a sixth predetermined data transmission rate above the fifth predetermined data transmission rate (e.g., 20Mbps in the downlink and 10Mbps in the uplink).

Providing higher quality of service (e.g., a higher data transmission rate, a shorter data transmission delay, etc.) to the user equipment with the larger recharge amount, the user equipment has a lower fee per bit so that the user equipment enjoys a specific discount; and also the network operator can encourage the user to access the network more frequently for communication, thereby increasing an operation profit.

In a further embodiment, the charging-related information includes a plurality of rates of the user equipment corresponding to a plurality of time periods.

The plurality of rates corresponding to the plurality of time periods are communication rates (prices) of the user equipment in different time periods. For example, the user equipment is charged 15 Yuan for the use of each 1M data from AM 10:00 to PM 3:00, 5 Yuan for the use of each 1M data from PM 10:00 to AM 7:00 and 10 Yuan for the use of each 1M data at other time.

Firstly the policy and charging rules function entity obtains a first time value corresponding to the user equipment.

The first time value corresponding to the user equipment is the time in a time zone where the user equipment is located. For example, the time in a time zone where the user equipment is located is AM 11:00, and then the first time value is AM 11:00. In another example, the time in a time zone where the user equipment is located is PM 6:00, and then the first time value is PM 6:00.

Then the policy and charging rules function entity determines a first rate corresponding to the first time value among the plurality of rates corresponding to the plurality of time periods.

With the foregoing example of the communication rates, if the first time value of the user equipment is AM 11:00, then the first rate is 15 Yuan charged for the use of each 1M data, and if the first time value of the user equipment is PM 6:00, then the first rate is 10 Yuan charged for the use of each 1M data.

Next the policy and charging rules function entity compares the first rate with at least one predetermined rate.

Finally the policy and charging rules function entity determines the quality of service of the user equipment according to a result of the comparison.

For example, the at least one predetermined rate is 5 Yuan charged for the use of each 1M data or 10 Yuan charged for the use of each 1M data. When the first rate is below 5 Yuan, the user equipment is provided with a sixth predetermined data transmission rate (for example, 5Mbps in the downlink and 2Mbps in the uplink); when the first rate is between 5 Yuan and 15 Yuan, the user equipment is provided with a seventh predetermined data transmission rate above the sixth predetermined data transmission rate (for example, 10Mbps in the downlink and 5Mbps in the uplink); and when the first rate is above 15 Yuan, the user equipment is provided with an eighth predetermined data transmission rate above the seventh predetermined data transmission rate (for example, 15Mbps in the downlink and 10Mbps in the uplink).

In still another embodiment, the charging-related information includes a plurality of rates of the user equipment corresponding to a plurality of geographical areas.

The plurality of rates corresponding to the plurality of geographical areas are communication rates (prices) of the user equipment in different geographical areas. For example, the user equipment is located in an office building, and 15 Yuan is charged for the use of each 1M data; and the user equipment is located in a residential area, and 10 Yuan is charged for the use of each 1M data.

Firstly the policy and charging rules function entity obtains a first geographical location corresponding to the user equipment.

The first geographical location corresponding to the user equipment is the geographical location where the user equipment is located, e.g., the longitude and the latitude of the location where the user equipment is located, the street name of the location where the user equipment is located, the corresponding code of the location where the user equipment is located, etc.

Then the policy and charging rules function entity determines a second rate corresponding to the first geographical location among the plurality of rates corresponding to the geographical areas.

Next the policy and charging rules function entity compares the second rate with at least one predetermined rate.

Finally the policy and charging rules function entity determines the quality of service of the user equipment according to a result of the comparison.

For example, the at least one predetermined rate is 15 Yuan charged for the use of each 1M data or 10 Yuan charged for the use of each 1M data. When the second rate is below 10 Yuan, the user equipment is provided with a sixth predetermined data transmission rate (for example, 5Mbps in the downlink and 2Mbps in the uplink); when the second rate is between 10 Yuan and 20 Yuan, the user equipment is provided with a seventh predetermined data transmission rate above the sixth predetermined data transmission rate (for example, 10Mbps in the downlink and 5Mbps in the uplink); and when the second rate is above 20 Yuan, the user equipment is provided with an eighth predetermined data transmission rate above the seventh predetermined data transmission rate (for example, 15Mbps in the downlink and 10Mbps in the uplink).

Providing higher quality of service (e.g., a higher data transmission rate, a shorter data transmission delay, etc.) for the user equipment with a higher rate, the user equipment can be encouraged to access the service with higher rate, thereby improving the operation profit of the network operator, and also the user equipment can select different rate according to his or her desired quality of service.

In a further embodiment, the charging-related information includes the payment history.

The payment history of the user equipment can be embodied in numerous ways. For example, the user equipment has no overdue bill, the user equipment has an overdue bill of 10 Yuan, the user equipment has an overdue bill of 100 Yuan, etc.

The policy and charging rules function entity determines the quality of service of the user equipment according to the payment history of the user equipment. For example, the user equipment without any overdue bill is provided with a ninth predetermined data transmission rate (e.g., 10Mpbs in the downlink and 5Mbps in the uplink), the user equipment with an overdue bill below 50 Yuan is provided with a tenth predetermined data transmission rate (e.g., 5Mpbs in the downlink and 2Mbps in the uplink), and the user equipment with an overdue bill above 50 Yuan is provided with an eleventh predetermined data transmission rate (e.g., 10Kbps in the downlink and 10Kbps in the uplink).

Providing higher quality of service (e.g., a higher data transmission rate, a shorter data transmission delay, etc.) for the user equipment with a better payment history, the user equipment can be encouraged to pay duly, thereby guaranteeing constant operation of the network.

Fig.7 is a schematic diagram of a controlling apparatus 700 according to an embodiment of the invention.

According to an embodiment of a second aspect of the invention, there is provided a controlling apparatus, in a policy and charging rules function entity, for controlling quality of service corresponding to a user equipment.

Referring to Fig.7, the controlling apparatus 700 comprises a first obtaining device 710 and a first determining device 720.

The first obtaining device 710 is configured to obtain charging-related information about the user equipment. The first determining device 720 is configured to determine the quality of service corresponding to the user equipment according to the charging-related information.

The first obtaining device can be implemented in numerous ways.

In an embodiment, the first obtaining device includes a first transmitting device and a first receiving device.

The first transmitting device is configured to transmit a user charging information request to a subscription profile repository. The user charging information request is used for requesting the subscription profile repository to transmit the charging-related information. The subscription profile repository stores the charging-related information received from an online charging system.

The first receiving device is configured to receive the charging-related information from the subscription profile repository.

In another embodiment, the first obtaining device includes a second transmitting device and a second receiving device.

The second transmitting device is configured to transmit a user charging information request to an online charging system. The user charging information request is used for requesting the online charging system to transmit the charging-related information.

The second receiving device is configured to receive the charging-related information from the online charging system.

In a further embodiment, the first obtaining device includes a third receiving device.

The third receiving device is configured to receive a user charging information update request, the user charging information update request being used for requesting the policy and charging rules function entity to receive the charging-related information. The third receiving device is further configured to receive the charging-related information from a subscription profile repository, the subscription profile repository storing the charging-related information received from an online charging system, or the third receiving device is further configured to receive the charging-related information from an online charging system.

The first determining device can be implemented in numerous ways.

In an embodiment, the charging-related information includes a tariff package of the user equipment, and the first determining device includes a second obtaining device, a first comparing device and a second determining device.

The second obtaining device is configured to obtain an amount of used data of the user equipment in a period of the tariff package. The first comparing device is configured to compare the amount of used data with a predetermined amount of data corresponding to the tariff package. The second determining device is configured to determine the quality of service corresponding to the user equipment according to a result of the comparison.

In another embodiment, the charging-related information includes a recharge amount of the user equipment, and the first determining device includes a second comparing device and a third determining device.

The second comparing device is configured to compare the charging amount with at least one predetermined charging amount. The third determining device is configured to determine the quality of service corresponding to the user equipment according to a result of the comparison.

In a further embodiment, the charging-related information includes a plurality of rates of the user equipment corresponding to a plurality of time periods, and the first determining device includes a third obtaining device, a fourth determining device and a third comparing device.

The third obtaining device is configured to obtain a first time value corresponding to the user equipment. The fourth determining device is configured to determine a first rate corresponding to the first time value among the plurality of rates corresponding to the plurality of time periods. The third comparing device is configured to compare the first rate with at least one predetermined rate. The fourth determining device is further configured to determine the quality of service corresponding to the user equipment according to a result of the comparison.

In still another embodiment, the charging-related information includes a plurality of rates of the user equipment corresponding to a plurality of geographical areas, and the first determining device includes a fourth obtaining device, a fifth determining device and a fourth comparing device.

The fourth obtaining device is configured to obtain a first geographical location corresponding to the user equipment. The fifth determining device is configured to determine a second rate corresponding to the first geographical location among the plurality of rates corresponding to the plurality of geographical areas. The fourth comparing device is configured to compare the second rate with at least one predetermined rate. The fifth determining device is further configured to determine the quality of service corresponding to the user equipment according to a result of the comparison.

It will be apparent to those skilled in the art that the invention will not be limited to the details of the foregoing demonstrative embodiments and can be embodied in other form specific forms without departing the spirit or essence of the invention. Therefore the embodiments shall be deemed demonstrative but not limiting in any respect, and the scope of the invention will be defined by the appended claims but not by the foregoing description. Therefore any variations falling into the scope of the appended claims and their equivalences are intended to be encompassed in the scope of the invention. Any reference numerals in the claims shall not be construed as limiting the claims in question. Furthermore the term "comprising" evidently will not preclude another element(s) or step(s), and singular will not preclude plural. More than one devices recited in a system claim can alternatively be embodied by a single device in software or hardware. The terms "first", "second", etc., are intended to represent a name but not any specific order.

## Claims

1. A method, in a policy and charging rules function entity, of controlling quality of service corresponding to a user equipment, the method comprising the steps of:
A. obtaining charging-related information about the user equipment; and
B. determining the quality of service corresponding to the user equipment according to the charging-related information.

2. The method according to claim 1, wherein the step A is performed by the steps of:
- transmitting a user charging information request to a subscription profile repository, the user charging information request being used for requesting the subscription profile repository to transmit the charging-related information, and the subscription profile repository storing the charging-related information received from an online charging system; and
- receiving the charging-related information from the subscription profile repository.

3. The method according to claim 1, wherein the step A is performed by the steps of:
- transmitting a user charging information request to an online charging system, the user charging information request being used for requesting the online charging system to transmit the charging-related information; and
- receiving the charging-related information from the online charging system.

4. The method according to claim 1, wherein the step A is performed by the steps of:
- receiving a user charging information update request, the user charging information update request being used for requesting the policy and charging rules function entity to receive the charging-related information; and
- receiving the charging-related information from a subscription profile repository, the subscription profile repository storing the charging-related information received from an online charging system, or receiving the charging-related information from an online charging system.

5. The method according to claim 1, wherein the charging-related information comprises at least one of: a tariff package type of the user equipment, a recharge amount of the user equipment, a plurality of rates of the user equipment corresponding to a plurality of time periods and a plurality of rates of the user equipment corresponding to a plurality of geographical areas.

6. The method according to claim 1, wherein when the charging-related information comprises a tariff package of the user equipment, the step B is performed by the steps of:
- obtaining an amount of used data of the user equipment in a period of the tariff package;
- comparing the amount of used data with a predetermined amount of data corresponding to the tariff package; and
- determining the quality of service corresponding to the user equipment according to a result of the comparison.

7. The method according to claim 1, wherein when the charging-related information comprises a recharge amount of the user equipment, the step B is performed by the steps of:
- comparing the recharge amount with at least one predetermined recharge amount; and
- determining the quality of service corresponding to the user equipment according to a result of the comparison.

8. The method according to claim 1, wherein when the charging-related information comprises a plurality of rates of the user equipment corresponding to a plurality of time periods, the step B is performed by the steps of:
- obtaining a first time value corresponding to the user equipment;
- determining a first rate corresponding to the first time value among the plurality of rates corresponding to the plurality of time periods;
- comparing the first rate with at least one predetermined rate; and
- determining the quality of service corresponding to the user equipment according to a result of the comparison.

9. The method according to claim 1, wherein when the charging-related information comprises a plurality of rates of the user equipment corresponding to a plurality of geographical areas, the step B is performed by the steps of:
- obtaining a first geographical location corresponding to the user equipment;
- determining a second rate corresponding to the first geographical location among the plurality of rates corresponding to the plurality of geographical areas;
- comparing the second rate with at least one predetermined rate; and
- determining the quality of service corresponding to the user equipment according to a result of the comparison.

10. A controlling apparatus, in a policy and charging rules function entity, for controlling quality of service corresponding to a user equipment, the controlling apparatus comprising:
a first obtaining device configured to obtain charging-related information about the user equipment; and
a first determining device configured to determine the quality of service corresponding to the user equipment according to the charging-related information.

11. The controlling apparatus according to claim 10, wherein the first obtaining device comprises:
a first transmitting device configured to transmit a user charging information request to a subscription profile repository, the user charging information request being used for requesting the subscription profile repository to transmit the charging-related information, and the subscription profile repository storing the charging-related information received from an online charging system; and
a first receiving device configured to receive the charging-related information from the subscription profile repository.

12. The controlling apparatus according to claim 10, wherein when the charging-related information comprises a tariff package of the user equipment, the first determining device comprises:
a second obtaining device configured to obtain an amount of used data of the user equipment in a period of the tariff package;
a first comparing device configured to compare the amount of used data with a predetermined amount of data corresponding to the tariff package; and
a second determining device configured to determine the quality of service corresponding to the user equipment according to a result of the comparison.

13. The controlling apparatus according to claim 10, wherein when the charging-related information comprises a recharge amount of the user equipment, the first determining device comprises:
a second comparing device configured to compare the recharge amount with at least one predetermined recharge amount; and
a third determining device configured to determine the quality of service corresponding to the user equipment according to a result of the comparison.

14. The controlling apparatus according to claim 10, wherein when the charging-related information comprises a plurality of rates of the user equipment corresponding to a plurality of time periods, the first determining device comprises:
- a third obtaining device configured to obtain a first time value corresponding to the user equipment;
- a fourth determining device configured to determine a first rate corresponding to the first time value among the plurality of rates corresponding to the plurality of time periods; and
- a third comparing device configured to compare the first rate with at least one predetermined rate; and
the fourth determining device being further configured to determine the quality of service corresponding to the user equipment according to a result of the comparison.

15. The controlling apparatus according to claim 10, wherein when the charging-related information comprises a plurality of rates of the user equipment corresponding to a plurality of geographical areas, the first determining device comprises:
a fourth obtaining device configured to obtain a first geographical location corresponding to the user equipment;
a fifth determining device configured to determine a second rate corresponding to the first geographical location among the plurality of rates corresponding to the plurality of geographical areas;
a fourth comparing device configured to compare the second rate with at least one predetermined rate; and
the fifth determining device being further configured to determine the quality of service corresponding to the user equipment according to a result of the comparison.
